Europäisches Patentamt

(19) European Patent Office

Office européen des brevets

(11) **EP 1 436 906 B1**

(12) **EUROPEAN PATENT SPECIFICATION**

(45) Date of publication and mention
of the grant of the patent:
**14.12.2005 Bulletin 2005/50**

(21) Application number: **02801403.3**

(22) Date of filing: **15.10.2002**

(51) Int Cl.⁷: $H04B\ 1/707$, $H04B\ 7/26$

(86) International application number:
**PCT/GB2002/004660**

(87) International publication number:
**WO 2003/034605 (24.04.2003 Gazette 2003/17)**

(54) **RAY CLASSIFICATION**

STRAHLKLASSIFIZIERUNG

CLASSEMENT DE FAISCEAU

(84) Designated Contracting States:
**AT BE BG CH CY CZ DE DK EE ES FI FR GB GR
IE IT LI LU MC NL PT SE SK TR**

(30) Priority: **15.10.2001 GB 0124719**

(43) Date of publication of application:
**14.07.2004 Bulletin 2004/29**

(73) Proprietor: **Ubinetics Limited
Melbourn, Hertfordshire SG8 6DP (GB)**

(72) Inventor: **DEEDMAN, Robert
Cambridge, Cambridgeshire CB4 3EN (GB)**

(74) Representative: **Pratt, David Martin et al
Withers & Rogers LLP
Goldings House,
2 Hays Lane
London SE1 2HW (GB)**

(56) References cited:
**EP-A- 1 130 793          WO-A-00/67396**

**Description**

This invention relates to a method of determining the timing of the frame boundary and group of a ray received at a code division multiple access receiver.

The universal mobile telephone system (UMTS) will use code division multiple access (CDMA) to communicate on both uplink and downlink communications between node Bs and user equipment (UE). Downlink communications (node B to UE) will have a scrambling code, specific to the particular node B, modulated thereon. However, each slot of each frame (there will be fifteen slots in each frame) of downlink communications is proposed to commence with a 256 chip universal word, which is not modulated with the scrambling code. This universal word is the same for every slot of every frame, and its repeated transmission is hereafter referred to as the primary synchronisation channel (PSCH). UEs can detect node Bs, or cells, by detecting the PSCH without any knowledge of the identity or location of the node B, its scrambling code or its timing. However, all the information that can be gleaned from the PSCH is the slot timing. Frame timing and scrambling code information is not available from the PSCH channel.

Node Bs will transmit a secondary synchronisation channel (SSCH), on which a sequence of secondary synchronisation codes (SSCs) are transmitted. The SSCs are transmitted for the first 256 chips of the fifteen slots in a frame. The sixteen different SSCs are constructed from position wise multiplication of a 256 chip long Hadamard sequence with a 256 chip long known sequence Z. The SSCs are orthogonal to the primary synchronisation code (PSC) and have a low cross-correlation with the primary scrambling codes. There are 64 different SSC sequences proposed to be used in UMTS.

A UE will be able, for a ray corresponding to a signal received from a cell, to detect the SSC sequences of a received signal corresponding to the ray for up to fifteen consecutive slots, and from this determine the scrambling code group and the frame timing using a SSC look-up table. The received signal is then correlated against each of eight scrambling codes which form the scrambling code group, and the scrambling code identified by detecting a high degree of correlation from one of the resulting signals. Determination of the scrambling code and frame and slot timing is known as ray classification.

An exemplary cell search apparatus and method is described in published patent application WO 00/67396.

A known method of determining the scrambling code group and frame timing is as follows.

For each slot of SSC data, a fast Hadamard transform (FHT) is performed. A fast Hadamard transform serves, in effect, to correlate the SSC sequence for a slot against sixteen different Hadamard codes. This results in a sixteen bin vector for each of the fifteen slots in a frame. Bin 0 is the correlation of the SSC data against Hadamard code 0, bin 1 is the correlation of the SSC data against Hadamard code 16, bin 2 is the correlation of the SSC data against Hadamard code 32, and so on. The bins therefore each contain a value representative of the power resulting from the correlation of the SSC data against a different one of the Hadamard codes. The fast Hadamard transform takes advantage of the symmetry in the Hadamard codes to perform the correlations with a relatively small number of calculations. The results of the FHT operations are stored in an FHT matrix of size sixteen rows by n columns, where n is the number of slots of data that has been collected (which is between three and fifteen). The matrix is denoted Â.

The SSC look-up table comprises a matrix of 64 rows, with each row corresponding to a different scrambling code group, by fifteen columns, with each column corresponding to a different slot timing. Let us call the values for a row (corresponding to scrambling code M) $j_0$ ....... $j_{14}$. These fifteen bin values are used as row indices for columns of the FHT matrix. For the scrambling code M, n values are accumulated from the FHT matrix, one value from each column (slot). Where n is less than fifteen, there are 15-n zero values. Let us call the columns of the FHT matrix k, where k = 0 .... n. The row of the FHT matrix selected when accumulating values from the fifteen columns is the value $j_k$. The accumulation process if repeated for each of the fifteen possible time offsets, where offset = 0 .... 14 and denotes the columns of the SSC matrix. Accumulated power is given by:

$$\text{Accumulated Power}_{m,offset} = \sum_{k=0} A_{j_{(k,offset \bmod 15)},k}$$

Once the accumulated power has been calculated for each of the positions in the SSC matrix, the position showing the highest power is identified and an appropriate output is given. The highest power gives the greatest degree of correlation, and thus identifies the scrambling code group and slot timing. This process requires 14,625 (64 X 15 X 15) accumulations, which constitutes a significant processing burden.

It is an aim of the invention to reduce the processing burden on obtaining the scrambling code group and the timing of the frame boundary of a received ray.

The present invention provides a method of determining the timing of the frame boundary and group of a ray received at a code division multiple access receiver from slots of data transmitted thereon, the method comprising:

correlating a first slot of data against N Hadamard codes, to provide a first vector of length N bins;

identifying the bin of the first vector which has the largest power;

correlating a second slot of data against the N Hadamard codes, the second slot being separated from the first slot by X slots where X is an integer, to provide a second vector of length N bins;

identifying the bin of the second vector which has the largest power;

searching through a table linking bin numbers to slot timings and groups for occurrences of a first value, the first value corresponding to the identity of the largest power bin of the first vector, being separated from a second value, corresponding to the identity of the largest power bin of the second vector, by an amount equal to X slots; and

on the basis of a result of the searching step, providing an output representative of the timing of the frame boundary and group of the ray.

Preferably, the searching step comprises:

forming a list of occurrences of the first value in the table; and

using the list to search for occurrences of the second value in the table the second value being separated from the first value by X slots.

Advantageously, X is a value equal to 1.

In a preferred embodiment, the method further comprises:

correlating a third slot of data against Hadamard codes, the third slot being separated from the first slot by Y slots, where Y is an integer, and the third slot being separated from the second slot by (Y-X) slots, to provide a third vector of length N bins;

identifying the bin of the third vector which has the largest power; and

searching through the table for occurrences where a third value, corresponding to the identity of the largest power bin of the third vector, is separated from the first value by an amount equal to Y slots, and from the second value by an amount equal to (Y-X) slots.

The invention also provides a method of determining the timing of the frame boundary and group of a ray received at a code division multiple access receiver from slots of data transmitted thereon, the method comprising:

correlating a first slot of data against N Hadamard codes, to provide a first vector of length N bins;

identifying S bins of the first vector which have the largest powers, where S is an integer;

correlating a second slot of data against the N Hadamard codes, the second slot being separated from the first slot by X slots where X is an integer, to provide a second vector of length N bins;

identifying S bins of the second vector which have the largest powers;

searching through a table linking bin numbers to slot timings and groups for occurrences of any value from a first set of values, corresponding to the identities of the S largest power bins of the first vector, the value being separated from any value from a second set of values, corresponding to the identities of the S largest power bins of the second vector, by an amount equal to X slots; and

on the basis of a result of the searching step, providing an output representative of the timing of the frame boundary and group of the ray.

An embodiment of the present invention will now be described, by way of example only.

The method of the preferred embodiment is as follows. A first slot of SSC data is received at a UMTS receiver. A fast Hadamard transform (FHT) is performed on the first slot of data, resulting in a vector of length sixteen bins. Each bin contains a value which is a measure of the power of the correlation of the first slot of SSC data with a different one of the sixteen Hadamard codes used in UMTS. The bin which contains the largest value, and thus the highest power, is identified, and the bin number is labelled P. The method then searches in the SSCH table (of size 64 rows by fifteen columns, as described above) for all values of P. A list of pairs of co-ordinates identifying the positions in the table where P was found is then prepared. The number of pairs of co-ordinates appearing in this list depends on the number P.

The method then takes a second slot of SSC data, which second slot immediately follows the first slot, and performs an FHT on this data to produce a second vector of length 16 bins. The bin having the highest value is identified, and this is labelled Q. The method then goes to the first pair of co-ordinates in the list, and determines if the SSC code in the same column but one row to the right (the succeeding slot for that code group) is equal to Q. If this SSC code is equal to Q, the pair of co-ordinates is maintained in the list. If the SSC code is not equal to Q, the pair of co-ordinates is removed from the list. This procedure is repeated for every pair of co-ordinates in the list. The result is that most of the pairs of co-ordinates are removed, leaving only a small number.

If the number of pairs of co-ordinates remaining in the list at this stage is one, then the method determines that the slot timing and code group have been found, this information being given by the pair of co-ordinates remaining. An output is then provided giving the slot timing and code group.

If the number of pairs of co-ordinates remaining is greater than one, the method performs on FHT on a third slot of received SSC data. The third slot is the slot immediately following the second slot. The one of the sixteen resulting bins which has the largest value is then identified, and this bin is labelled R. The method then, for each pair of co-ordinates remaining in the list, determines if the SSCH table contains an SSC code equal to R at a position two slots to the right in the same code group as that pair of co-ordinates. This procedure will result in only one pair of co-ordinates remaining, which co-ordinates identify the slot number and code group of the received signal. An output containing this information is then provided. Information concerning the timing of the frame boundary is given by the slot number. The minimum number of slots required to achieve a unique position in the look-up table is three. If only two slots are correlated, there is potentially more than one solution. The third slot ensures that the solution is unique, provided that the determinations for the first and second slots were correct.

It will be seen that slot timing and code group information may therefore be obtained with significantly fewer calculations than the above described prior art procedure. Furthermore, this information is obtained after receiving only two or three slots of SSC data instead of a whole frame's worth of data. This can allow a significant increase in the speed of ray classification.

The above method has been shown to function well under sufficiently high signal-to-noise ratio conditions. To increase the robustness of the method, the below described modification may be used.

Instead of identifying only the bin containing the largest value, the bins having the N largest values are identified. N may be two, for example. N bins are identified for each slot of data. The result of this is to increase the number of co-ordinates contained in the list at each stage, and to increase the number of slots with which a FHT is performed. However, the method is more robust since it will provide correct results if it is the bin with the second highest value, rather than the bin with the highest value, which is the correct bin at any stage. Obviously, the higher the value of N, the more calculations are required to execute the method.

Although the above methods have been described using SSC data from immediately succeeding slots, it will be appreciated that the invention could instead be performed using SSC data from any of the slots in a frame. Also, correlations other than Fast Hadamard transforms could be used, although FHTs are preferred.

**Claims**

1. A method of determining the timing of the frame boundary and group of a ray received at a code division multiple access receiver from slots of data transmitted thereon, the method comprising:

    correlating a first slot of data against N Hadamard codes, to provide a first vector of length N bins;
    identifying the bin of the first vector which has the largest power;
    correlating a second slot of data against the N Hadamard codes, the second slot being separated from the first slot by X slots where X is an integer, to provide a second vector of length N bins;
    identifying the bin of the second vector which has the largest power; **characterised by**
    searching through a table linking bin numbers to slot timings and groups for occurrences of a first value, corresponding to the identity of the largest power bin of the first vector, the first value being separated from a second value, corresponding to the identity of the largest power bin of the second vector, by an amount equal to X slots; and
    on the basis of a result of the searching step, providing an output representative of the timing of the frame boundary and group of the ray.

2. A method as claimed in claim 1, in which the searching step comprises:

    forming a list of occurrences of the first value in the table; and
    using the list to search for occurrences of the second value in the table, the second value being separated from the first value by X slots.

3. A method as claimed in claim 1 or claim 2, wherein X is a value equal to 1.

4. A method as claimed in any one of claims 1 to 3, further comprising:

    correlating a third slot of data against Hadamard codes, the third slot being separated from the first slot by Y slots, where Y is an integer, and the third slot being separated from the second slot by (Y-X) slots, to provide a third vector of length N bins;
identifying the bin of the third vector which has the largest power; and
searching through the table for occurrences where a third value, corresponding to the identity of the largest power bin of the third vector, is separated from the first value by an amount equal to Y slots, and from the second value by an amount equal to (Y-X) slots.

5. A method as claimed in claim 4, where in X is a value equal to 1 and Y is a value equal to 2.

6. A method of determining the timing of the frame boundary and group of a ray received at a code division multiple access receiver from slots of data transmitted thereon, the method comprising:

correlating a first slot of data against N Hadamard codes, to provide a first vector of length N bins;
identifying S bins of the first vector which have the largest powers, where S is an integer;
correlating a second slot of data against the N Hadamard codes, the second slot being separated from the first slot by X slots where X is an integer, to provide a second vector of length N bins;
identifying S bins of the second vector which have the largest powers; **characterised by**
searching through a table linking bin numbers to slot timings and groups for occurrences of any value from a first set of values, corresponding to the identities of the S largest power bins of the first vector, the value being separated from any value from a second set of values, corresponding to the identities of the S largest power bins of the second vector, by an amount equal to X slots; and
on the basis of a result of the searching step, providing an output representative of the timing of the frame boundary and group of the ray.

**Patentansprüche**

1. Verfahren zur Bestimmung des Zeittaktes der Framegrenzen und der Gruppe eines Strahls, der an einem CDMA-Empfänger empfangen wird, anhand von darauf übertragenden Datenslots, mit den Schritten:

Korrelieren eines ersten Datenslots mit N Hadamard-Codes, um einen ersten Vektor der Länge N zu bilden,
Identifizieren der Komponente des ersten Vektors, die die größte Macht hat,
Korrelieren eines zweiten Datenslots mit den N Hadamard-Codes, wobei der zweite Slot von dem ersten Slot durch X Slots getrennt ist, wobei X eine ganze Zahl ist, um einen zweiten Vektor der Länge N zu bilden,
Identifizieren der Komponente des zweiten Vektors, die die größte Macht hat, **gekennzeichnet durch**:

Durchsuchen einer Tabelle, die Komponentenindizes mit Slotzeiten und Gruppen verknüpft, nach dem Auftreten eines ersten Wertes, entsprechend der Identität der Komponente des ersten Vektors mit der größten Macht, welcher erste Wert von einem zweiten Wert, entsprechend der Identität der Komponente des zweiten Vektors mit der größten Macht, um einen Betrag von X Slots getrennt ist, und
Bereitstellen einer Ausgabe, die für die den Zeittakt der Framegrenzen und die Gruppe des Strahls repräsentativ ist, auf der Grundlage des Resultats des Durchsuchungsschrittes.

2. Verfahren nach Anspruch 1, bei dem der Durchsuchungsschritt umfaßt:

Erstellen einer Liste von Auftritten des ersten Wertes in der Tabelle und
Verwenden der Liste zur Suche nach Auftritten des zweiten Wertes in der Tabelle, wobei der zweite Wert von dem ersten Wert um X Slots getrennt ist.

3. Verfahren nach Anspruch 1 oder 2, bei dem X ein Wert gleich 1 ist.

4. Verfahren nach einem der Ansprüche 1 bis 3, mit den Schritten:

Korrelieren eines dritten Datenslots mit Hadamard-Codes, wobei der dritte Slot von dem ersten Slot durch Y Slots getrennt ist, wobei Y eine ganze Zahl ist, und der dritte Slot von dem zweiten Slot durch (Y-X) Slots getrennt ist, um einen dritten Vektor der Länge N zu bilden,
Identifizieren der Komponente des dritten Vektors, die die größte Macht hat, und
Durchsuchen der Tabelle nach dem Auftreten von Situationen, in denen der dritte Wert, entsprechend der Identität der Komponente des dritten Vektors mit der größten Macht, von dem ersten Wert durch einen Betrag von Y Slots und von dem zweiten Wert durch einen Betrag von (Y-X) Slots getrennt ist.

**5.** Verfahren nach Anspruch 4, bei dem X ein Wert gleich 1 und Y ein Wert gleich 2 ist.

**6.** Verfahren zur Bestimmung des Zeittaktes der Framegrenzen und der Gruppe eines Strahls, der an einem CDMA-Empfänger empfangen wird, anhand von darauf übertragenden Datenslots, mit den Schritten:

Korrelieren eines ersten Datenslots mit N Hadamard-Codes, um einen ersten Vektor der Länge N zu bilden, Identifizieren von S Komponenten des ersten Vektors, die die größte Macht haben, wobei S eine ganze Zahl ist, Korrelieren eines zweiten Datenslots mit den N Hadamard-Codes, wobei der zweite Slot von dem ersten Slot durch X Slots getrennt ist, wobei X eine ganze Zahl ist, um einen zweiten Vektor der Länge N zu bilden, Identifizieren von S Komponenten des zweiten Vektors, die die größte Macht haben, **gekennzeichnet durch**:

Durchsuchen einer Tabelle, die Komponentenindizes mit Slotzeiten und Gruppen verknüpft, nach dem Auftreten irgendeines Wertes aus einer ersten Menge von Werten, entsprechend den Identitäten der S Komponenten des ersten Vektors mit der größten Macht, wobei der Wert von irgendeinem Wert aus einer zweiten Menge von Werten, entsprechend den Identitäten der S Komponenten des zweiten Vektors mit der größten Macht, um einen Betrag von X Slots getrennt ist, und Bereitstellen einer Ausgabe, die für die Zeiten der Framegrenzen und die Gruppe des Strahls repräsentativ ist, auf der Grundlage des Resultats des Durchsuchungsschrittes.

**Revendications**

**1.** Procédé de détermination de la synchronisation de la limite de trame et du groupe d'un rayon reçu au niveau d'un récepteur d'accès multiple par division de code à partir de tranches de données transmises sur ce dernier, lequel procédé comprenant :

la corrélation d'une première tranche de données par rapport aux N codes Hadamard pour fournir un premier vecteur de longueur N cases ;
l'identification de la case du premier vecteur qui a la plus grande puissance ;
la corrélation d'une deuxième tranche de données par rapport aux N codes Hadamard, la deuxième tranche étant séparée de la première tranche par X tranches, où X est un nombre entier, pour fournir un deuxième vecteur de longueur N cases ;
l'identification de la case du deuxième vecteur qui a la puissance la plus grande, **caractérisé par**
la recherche, dans une table reliant les numéros de case aux synchronisations de tranches et des groupes, d'occurrences d'une première valeur, correspondant à l'identité de la plus grande case de puissance du premier vecteur, laquelle première valeur étant séparée d'une deuxième valeur, correspondant à l'identité de la plus grande case de puissance du deuxième vecteur, par une quantité égale à X tranches ; et
sur la base d'un résultat de l'étape de recherche, la fourniture d'une sortie représentant la synchronisation de la limite de trame et du groupe du rayon.

**2.** Procédé selon la revendication 1, dans lequel l'étape de recherche comprend :

la formation d'une liste d'occurrences de la première valeur dans la table ; et
l'utilisation de la liste pour rechercher des occurrences de la deuxième valeur dans la table, laquelle deuxième valeur étant séparée de la première valeur par X tranches.

**3.** Procédé selon la revendication 1 ou 2, dans lequel X est une valeur égale à 1.

**4.** Procédé selon l'une quelconque des revendications 1 à 3, comprenant en outre :

la corrélation d'une troisième tranche de données par rapport aux codes Hadamard, laquelle troisième tranche étant séparée de la première tranche par Y tranches, où Y est un nombre entier, et la troisième tranche étant séparée de la deuxième tranche par (Y-X) tranches, pour fournir un troisième vecteur de longueur N cases ;
l'identification de la case du troisième vecteur qui a la plus grande puissance ; et
la recherche dans la table d'occurrences où une troisième valeur, correspondant à l'identité de la plus grande case de puissance du troisième vecteur, est séparée de la première valeur par une quantité égale à Y tranches, et de la deuxième valeur par une quantité égale à (Y-X) tranches.

5. Procédé selon la revendication 4, dans lequel X est une valeur égale à 1 et Y est une valeur égale à 2.

6. Procédé de détermination de la synchronisation de la limite de trame et du groupe d'un rayon reçu au niveau d'un récepteur d'accès multiple par division de code à partir de tranches de données transmises sur ce dernier, lequel procédé comprenant :

la corrélation d'une première tranche de données par rapport à N codes Hadamard, pour fournir un premier vecteur de longueur N cases ;
l'identification de S cases du premier vecteur qui a les plus grandes puissances, où S est un nombre entier ;
la corrélation d'une deuxième tranche de données par rapport aux N codes Hadamard, laquelle deuxième tranche étant séparée de la première tranche par X tranches, où X est un nombre entier, pour fournir un deuxième vecteur de longueur N cases ;
l'identification de S cases du deuxième vecteur qui a les plus grandes puissances ; **caractérisé par**
la recherche dans une table reliant les numéros de case aux synchronisations de tranches et de groupes, d'occurrences d'une valeur quelconque à partir d'un premier ensemble de valeurs, correspondant aux identités des S plus grandes cases de puissance du premier vecteur, laquelle valeur étant séparée d'une valeur quelconque d'un deuxième ensemble de valeurs, correspondant aux identités des plus grandes cases de puissance S du deuxième vecteur, par une quantité égale à X tranches ; et
sur la base d'un résultat de l'étape de recherche, la fourniture d'une sortie représentant la synchronisation de la limite de trame et du groupe de rayon.